Europäisches Patentamt

European Patent Office

Office européen des brevets

(19)

(11) Veröffentlichungsnummer: **0 423 620 A1**

# (12) EUROPÄISCHE PATENTANMELDUNG

(21) Anmeldenummer: 90119512.3

(22) Anmeldetag: 11.10.90

(51) Int. Cl.5: **F16H 55/36**

(30) Priorität: 18.10.89 DE 8912387 U

(43) Veröffentlichungstag der Anmeldung:
24.04.91 Patentblatt 91/17

(84) Benannte Vertragsstaaten:
DE FR GB IT SE

(71) Anmelder: **MAGNA INTERNATIONAL GMBH**
**Altenhasslauer Weg 5-7**
W-6460 Gelnhausen(DE)

(72) Erfinder: **Die Erfinder haben auf ihre**
**Nennung verzichtet**

(74) Vertreter: **Patentanwälte Grünecker,**
**Kinkeldey, Stockmair & Partner**
**Maximilianstrasse 58**
**W-8000 München 22(DE)**

(54) **Torsionsschwingungsgedämpfte Riemenscheibe.**

(57) Die Erfindung betrifft eine torsionsschwingungsgedämpfte Riemenscheibe, insbesondere für Kraftfahrzeuglichtmaschinen.

Um eine derartige Riemenscheibe zu schaffen,
bei der keine Drehschwingungen relativ zu treibenden Keilriemen auftreten und damit eine
Schwingungs- und Impulseinleitung in das Riementriebsystem weitgehend unterbunden ist, sieht die
Erfindung vor, daß ein Riemenscheibenring (1) mit
einer Angriffsringfläche (1') für einen Triebriemen
und einer mit einer Welle (6) verbindbaren Riemenscheibennabe (5) vorhanden ist, wobei zwischen
dem Riemenscheibenring (1) und der Riemenscheibennabe (5) ein Lager (4) für die Aufnahme radialer
Auflagekräfte des Treibriemens vorgesehen ist und
der Riemenscheibenring (1) und der Riemenscheibennabe (5) über ein neben dem Lager (4) angeordnetes elastische Dämpfungselement (3) für die Übertragung tangentialer Antriebskräfte verbunden und
gegeneinander unter Scherbeanspruchung des
Dämpfungselements (3) elastisch verdrehbar sind.

FIG.1

EP 0 423 620 A1

Die Neuerung bezieht sich auf eine torsionsschwingungsgedämpfte Riemenscheibe, die insbesondere für Kraftfahrzeuglichtmaschinen vorgesehen ist.

Bei Verbrennungsmotoren, insbesondere Motoren für Personen- und Lastkraftwagen, besteht das Problem, daß es durch Torsionsschwingungen im Riementriebsystem unter Erzeugung lästiger Zirpgeräusche zum Flattern und zu Verdrehungen des Riemens sowie zu Riemenschlupf kommen kann. Die Torsionsschwingungen beeinträchtigen dadurch in erheblichem Maße die Lebensdauer der Treibriemen und damit die Langzeit-Zuverlässigkeit der Motoren.

Bekannte Abhilfemaßnahmen, wie zum Beispiel das Anbringen einer hydraulischen Dämpfung an Riemenspannern, führten nicht zum gewünschten Erfolg.

Es ist die Aufgabe der Neuerung, eine Riemenscheibe, insbesondere für eine Lichtmaschine zu schaffen, bei der keine Drehschwingungen relativ zum treibenden Keilriemen auftreten und damit eine Schwings- und Impulseinleitung in das Riementriebsystem weitgehend unterbunden ist.

Die neuerungsgemäße Lösung dieser Aufgabe ist durch eine Riemenscheibenring mit einer Angriffsringfläche für einen Treibriemen und eine mit einer Welle verbindbare Riemenscheibennabe gekennzeichnet, wobei zwischen dem Riemenscheibenring und der Riemenscheibennabe ein Lager für die Aufnahme radialer Auflagekräfte des Treibriemens vorgesehen ist und der Riemenscheibenring und die Riemenscheibennabe über ein elastisches Dämpfungselement verbunden und gegeneinander unter Scherbenspruchung des Dämpfungselements elastisch verdrehbar verbunden sind.

Durch diese neuerungsgemäße Lösung wird eine merkliche Drehschwingungsdämpfung erreicht. Es hat sich insbesondere herausgestellt, daß sich durch Lichtmaschinen mit der neuerungsgemäßen Riemenscheibe bei PKW- und LKW-Motoren ein merkliche Schwingungsdämpfung des Riementriebsystems erreichen läßt.

In einem bevorzugten Ausführungsbeispiel der Neuerung ist das Dämpfungselement ringförmig ausgebildet und weist eine hochtemperaturbeständige Kautschuckmischung auf. Dabei ist das Dämpfungselement zweckmäßig zwischen der Riemenscheibennabe und einem Zwischenring einvulkanisiert, über den das Dämpfungselement mit dem Riemenscheibenring verbunden ist. Der Zwischenring ist mit dem Riemenscheibenring vorteilhaft durch einen Preßsitz verbunden. Dieser Preßsitz, wie auch ein Preßsitz zwischen dem Lager und der Nabe sowie zwischen dem Lager und dem Riemenscheibenring bieten Vorteile in bezug auf eine einfache Montage der Riemenscheibe.

In weiterer vorteilhafter Ausgestaltung der Neuerung kann vorgesehen sein, daß der Riemenscheibenring mit der Riemenscheibennabe mechanisch derart im Eingriff steht, daß bei einem Bruch oder einer Überdehnung des Dämpfungselements zur Gewährleistung eines Notlaufs eine Drehmomentübertragung vom Riemenscheibenring zur Riemenscheibennabe erfolgt.

Weitere vorteilhafte Ausgestaltungsmöglichkeiten der Neuerung gehen aus den Unteransprüchen hervor. Die Neuerung soll nun anhand von Ausführungsbeispielen und der beiliegenden Zeichnungen weiter erläutert und beschrieben werden. Es zeigen:

Fig. 1 ein erstes Ausführungsbeispiel für eine neuerungsgemäße Riemenscheibe,

Fig. 2 einen Riemenscheibenring, wie er bei dem Ausführungsbeispiel von Fig. 1 verwendet ist, in einer Vorderansicht,

Fig. 3 eine Riemenscheibennabe, wie sie bei dem Ausführungsbeispiel gemäß der Fig. verwendet ist, in einer Vorderansicht, und

Fig. 4 ein weiteres Ausführungsbeispiel für eine Riemenscheibe gemäß der Neuerung.

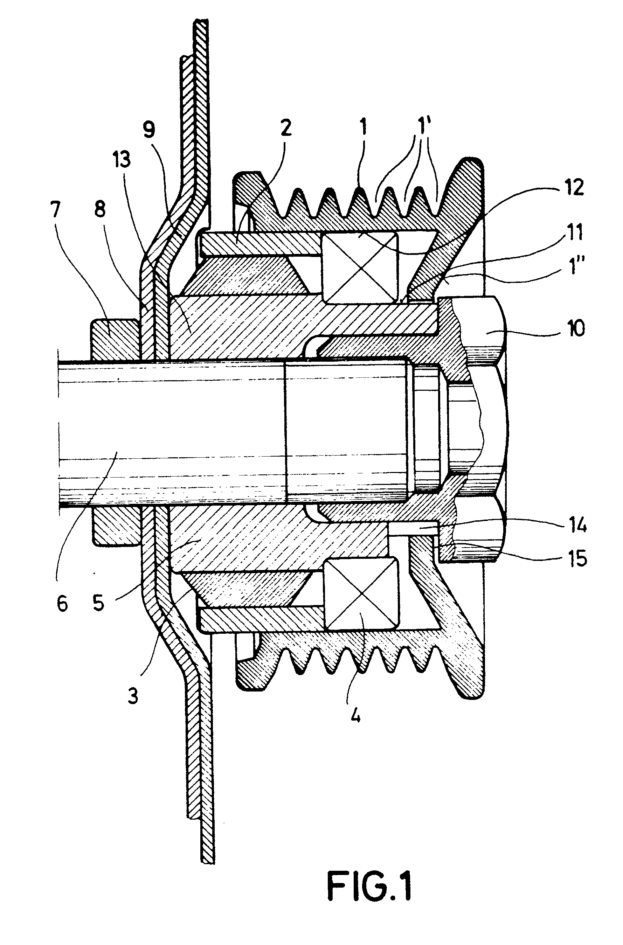

In der Fig. 1 ist mit dem Bezugzeichen 1 ein Riemenscheibenring bezeichnet, wobei der Riemenscheibenring 1 im vorliegenden Ausführungsbeispiel sechs als V-förmige Rillen ausgebildete Ringflächen $1'$ für die Anlage gegen einen oder gegen mehrere Keilriemen aufweist. Anstelle der sechs Rillen könnte auch nur eine Rille oder eine in axialer Richtung ebene Treibriemenangriffsfläche vorgesehen sein. Mit $1''$ ist eine Seitenringfläche des Riemenscheibenrings 1 bezeichnet.

Der Riemenscheibenring 1 befindet sich im vorliegenden Ausführungsbeispiel im Preßsitz mit dem (in Fig. 1 nicht gesondert hervorgehobenen) Außenring eines Kugellagers 4. Der (in Fig. 1 ebenfalls nicht gesondert dargestellte) Innenring des Kugellagers 4 befindet sich seinerseits im Preßsitz mit einer Fläche 11 einer koaxial zum Riemenscheibenring angeordneten Riemenscheibennabe 5. Anstelle eines Kugellagers könnte auch eine andere Art von Wälzlager oder ein Gleitlager aus einem Metall oder einem reibungsarmen Kunststoff, wie Polytetrafluoräthylen oder einem anderen DU-Material, vorgesehen sein. Statt über einen Preßsitz könnte das Lager 4 mit dem Riemenscheibenring 1 bzw. der Riemenscheibennabe 5 auch durch eine andere Verbindungsart, wie zum Beispiel Kleben, verbunden sein.

Mit 2 ist ein Zwischenring bezeichnet, der im vorliegenden Ausführungsbeispiel ebenfalls über eine Preßsitz mit einer Fläche 12 des Riemenscheibenrings verbunden ist. Die Verbindung könnte zum Beispiel auch durch eine Klebung erfolgen. Zwischen der Riemenscheibennabe 5 und dem Zwischenring 2 ist ein ringförmiges elastisches Dämpfungselement aus einer hochtemperaturbeständigen Kautschukmischung vorgesehen, wobei das Dämpfungselement im vorliegenden Ausführungsbeispiel zwischen der Nabe 5 und dem Zwischenring 2 einvulkanisiert ist. Auch hier wären andere Verbindungsarten, wie zum Beispiel Kleben, denkbar. Das Dämpfungselement könnte statt über den Zwischenring 2 auch direkt mit dem Riemenscheibenring 1, zum Beispiel durch Anvulkanisierung oder Klebung, verbunden sein. Neben Kautschukmischungen kommen für das Dämpfungselement auch andere elastische Materialien mit Dämpfungswirkung und Scherwiderstand aus Kunststoff in Betracht.

Die Innenfläche 12 des Riemenscheibenrings 1 könnte derart profiliert sein, daß gesonderte Anlageflächen ähnlich den Flächen 11 und 13 der Nabe, für das Lager und den Zwischenring (bzw. das Dämpfungselement) ausgebildet sind, so daß zum Beispiel das Lager oder/und der Zwischenring seitlichen Halt haben.

Die Riemenscheibennabe 5 ist bei dem Ausführungsbeispiel gemäß der Fig. 1 mit einer Lichtmaschinenwelle 6 durch Reibschluß verbunden. Es könnte auch eine formschlüssige Verbindung vorgesehen werden. Die Nabe 5 ist auf der Welle durch eine stirnseitige Trennwand 9 einer Lichtmaschine und eine auf das Ende der Welle 6 aufgeschraubte Halsmutter 10 gegen axiale Verschiebungen gesichert.

Mit 8 sind Schaufeln eines Lüfterrades bezeichnet, wie es bei Kraftfahrzeuglichtmaschinen üblicherweise stirnseitig vorgesehen ist, wobei die Belüftung durch (der Fig. 1 nicht dargestellte) Ausnehmungen in der Trennwand 9 erfolgt. Die Welle 6 ist gegen eine axiale Verschiebung relativ zur Trennwand 9 durch eine auf der Welle 6 sitzende Manschette 7 gesichert.

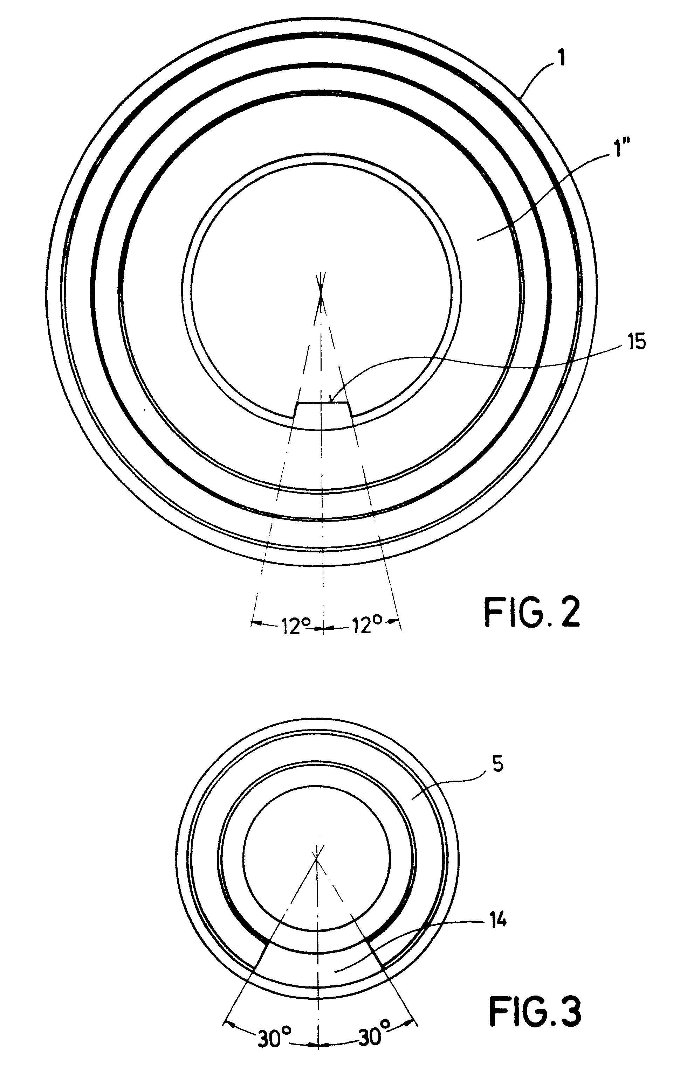

Mit 14 und 15 sind in der Fig. 1 bzw. in den Fig. 2 und 3 eine Ausnehmung in der Nabe 5 und eine aus der Seitenringfläche 1″ des Riemenscheibenrings 1 nach innen vorstehende Nase bezeichnet, wobei die Nase 15 in die Ausnehmung 14 eingreift. Im vorliegenden Ausführungsbeispiel erstreckt sich die Nase über einen Winkel von nur zweimal 12° des Kreisumfangs des Riemenscheibenrings, die Ausnehmung aber über einen Winkel von zweimal 30° des Kreisumfangs der Riemenscheibennabe, so daß die Nase 15 innerhalb der Ausnehmung beweglich ist.

Bei Antrieb des in der Fig. 1 dargestellten Riemenscheibenrings durch einen Keilriemen erfolgt die Übertragung von Antriebskräften von dem Riemenscheibenring 1 auf die Nabe 5 und damit die Welle 6 ausschließlich über das elastische Dämpfungselement 3, das damit Scherkräften ausgesetzt ist, während das Lager 4 nur die durch den Keilriemen ausgeübten radialen Kräfte aufnehmen kann. Indem die Übertagung über das elastische Dämpfungselement erfolgt, kann es nicht zu Torsionsschwingungen der Keilriemenscheibe relativ zum Riemen, und damit zu einer Einspeisung von Schwingungen bzw. Impulsen in das Riemensystem kommen. Für den Fall, daß das elastische Element 3 reißt oder überdehnt wird, erfolgt im Rahmen eines Notlaufs weiterhin eine Drehmomentübertragung von dem Riemenscheibenring 1 auf die Riemenscheibennabe 5 und damit die Welle 6, indem die Nase 15 des Riemenscheibenrings gegen einen Rand der Ausnehmung 14 in der Riemenscheibennabe anschlägt und die Riemenscheibennabe mitnimmt. Bei einem Bruch des Dämpfungselements kommt es somit nicht zu einem vollständigen Ausfall der Lichtmaschine, indem bis zu einer Reparatur ein Notlaufbetrieb aufrechterhalten werden kann.

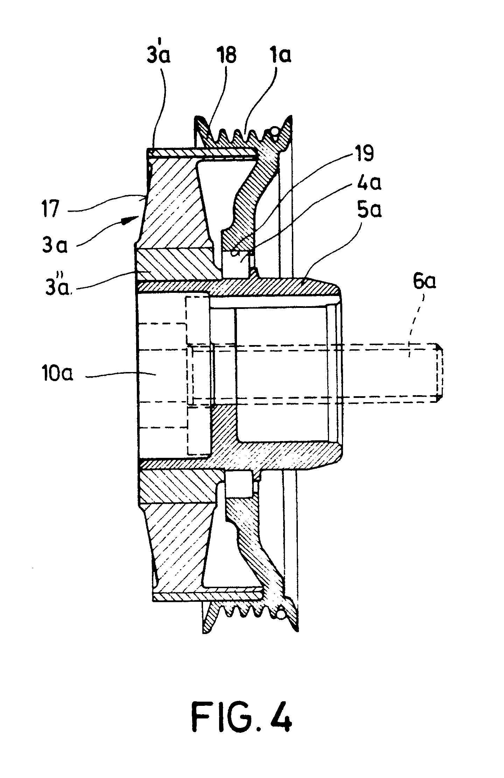

Bei dem in der Fig. 4 dargestellten weiteren Ausführungsbeispiel für eine neuerungsgemäße Riemenscheibe sind gleiche oder gleichwirkende Teile mit der gleichen, jedoch mit dem Index a versehenen Bezugszahl wie in der Fig. 1 bezeichnet. Bei dem Ausführungsbeispiel gemäß der Fig. 4 ist der Riemenscheibenring 1a mit der Riemenscheibennabe 5a direkt über ein Dämpfungselement 3a verbunden. Das Dämpfungselement 3a besteht aus zwei konzentrischen Ringen 3a′ und 3a″, die über Stege 17 miteinander verbunden sind. Im Gegensatz zu dem Ausführungsbeispiel von Fig. 1 sind zur Verbindung des Riemenscheibenrings 1a mit dem Dämpfungselement 3a eine gesonderte Fläche 18 und zur Verbindung mit dem Lager 4a eine gesonderte Fläche 19 vorgesehen.

## Ansprüche

1. Torsionsschwingungsgedämpfte Riemenscheibe, insbesondere für Kraftfahrzeuglichtmaschinen, **gekennzeichnet durch** einen Riemenscheibenring (1) mit einer Angriffsringfläche (1′) für einen Triebriemen und einer mit einer Welle (6) verbindbaren Riemenscheibennabe (5), wobei zwischen dem Riemenscheibenring (1) und der Riemenscheibennabe (5) ein Lager (4) für die Aufnahme radialer Auflagekräfte des Treibriemens vorgesehen ist und der Riemenscheibenring und die Riemenscheibennabe über ein neben dem Lager angeordnetes elastische Dämpfungselement (3) für die Übertragung tangentialer Antriebskräfte verbunden und gegeneinander unter Scherbeanspruchung des Dämpfungselements elastisch verdrehbar sind.
2. Riemenscheibe nach Anspruch 1, **dadurch gekennzeichnet,** daß das elastische Dämpfungselement (3) mit dem Riemenscheibenring (1) über einen Zwischenring (2) verbunden ist.
3. Riemenscheibe nach Anspruch 2, **dadurch gekennzeichnet,** daß zwischen dem Zwischenring (2) und dem Riemenscheibenring (1) ein Preßsitz hergestellt ist.

4. Riemenscheibe nach einem der Ansprüche 1 bis 3, **dadurch gekennzeichnet,** daß das elastische Dämpfungselement (3) ringförmig ausgebildet ist.

5. Riemenscheibe nach einem der Ansprüche 1 bis 4, **dadurch gekennzeichnet,** daß das Dämpfungselement (3) eine hochtemperaturbeständige Kautschukmischung aufweist.

6. Riemenscheibe nach einem der Ansprüche 1 bis 5, **dadurch gekennzeichnet,** daß das elastische Dämpfungselement (3) zwischen der Nabe (5) und dem Riemenscheibenring (1) bzw. dem Zwischenring (2) einvulkanisiert ist.

7. Riemenscheibe nach einem der Ansprüche 1 bis 6, **dadurch gekennzeichnet,** daß das Lager (4) ein Wälzlager, vorzugsweise ein Kugellager, ist.

8. Riemenscheibe nach einem der Ansprüche 1 bis 6, **dadurch gekennzeichnet,** daß das lager (4) ein Gleitlager aus Metall oder einem reibungsarmen Kunststoff, wie PTFE, ist.

9. Riemenscheibe nach einem der Ansprüche 1 bis 8, **dadurch gekennzeichnet,** daß zwischen dem Riemenscheibenring (1) und dem Lager (4) ein Preßsitz hergestellt ist.

10. Riemenscheibe nach einem der Ansprüche 1 bis 9, **dadurch gekennzeichnet,** daß zwischen dem Lager (4) und der Nabe (5) ein Preßsitz hergestellt ist.

11. Riemenscheibe nach einem der Ansprüche 1 bis 10, **dadurch gekennzeichnet,** daß der Riemenscheibenring (1) wenigstens eine V-förmige Rille als Angriffsfläche (1') für einen Riemen aufweist.

12. Riemenscheibe nach einem der Ansprüche 1 bis 11, **dadurch gekennzeichnet,** daß die Nabe (5) mit der Welle (6) durch Reibschluß verbindbar ist.

13. Riemenscheibe nach einem der Ansprüche 1 bis 11, **dadurch gekennzeichnet,** daß die Nabe (5) mit der Welle (6) durch Formschluß verbindbar ist.

14. Riemenscheibe nach einem der Ansprüche 1 bis 13, **dadurch gekennzeichnet,** daß die Nabe (5) durch eine Mutter (10) oder Schraube gegen axiale Verschiebung sicherbar ist.

15. Riemenscheibe nach einem der Ansprüche 1 bis 14, **dadurch gekennzeichnet,** daß die Nabe (5) eine unter Bildung gesonderter Auflageflächen (11,13) für das Dämpfungselement (3) und das Lager (4) profilierte Oberfläche aufweist.

16. Riemenscheibe nach einem der Ansprüche 1 bis 15, **dadurch gekennzeichnet,** daß der Riemenscheibenring (1) eine unter Bildung gesonderter Auflageflächen (18,19) für das Lager (4a) und das Dämpfungselement (3a) bzw. den Zwischenring profilierte Innenoberfläche aufweist.

17. Riemenscheibe nach einem der Ansprüche 1 bis 16, **dadurch gekennzeichnet,** daß der Treibriemenring (1) mit der Treibriemennabe (5) in einen bei Bruch oder Überdehnung des Dämpfungselementes (3) wirksamen mechanischen Eingriff für die Drehmomentübertragung bringbar ist.

18. Riemenscheibe nach Anspruch 17, **dadurch gekennzeichnet,** daß die Riemenscheibennabe (5) eine periphere Ausnehmung (14) aufweist, in die ein mit dem Riemenscheibenring (1) verbundenes Teil (15) hineinsteht.

FIG.1

FIG.2

FIG.3

FIG. 4

**Europäisches Patentamt**

# EUROPÄISCHER RECHERCHENBERICHT

Nummer der Anmeldung

EP 90 11 9512

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1396443 (RENAULT)<br>* Seiten 1 – 2; Figuren 1, 2 *<br><br>--- | 1, 6, 8, 11, 13, 14, 17 | F16H55/36 |
| X | DE-A-3402001 (DAIMLER-BENZ)<br>* Seiten 3 – 6; Figur 1 *<br><br>--- | 1-4, 6, 7, 11, 12, 17 | |
| X | DE-A-3430298 (GOETZE)<br>* Seiten 3 – 8; Figuren 2, 3 *<br><br>----- | 1-4, 6, 7, 11, 13-17 | |
| | | | **RECHERCHIERTE SACHGEBIETE (Int. Cl.5)**<br><br>F16H |

Der vorliegende Recherchenbericht wurde für alle Patentansprüche erstellt

| Recherchenort | Abschlußdatum der Recherche | Prüfer |
|---|---|---|
| DEN HAAG | 30 JANUAR 1991 | FLORES E. |